# EUROPEAN PATENT SPECIFICATION

(11) **EP 2 852 504 B1**
(45) Date of publication and mention of the grant of the patent: **23.03.2016**
(21) Application number: 13799253.3
(22) Date of filing: 26.11.2013
(51) Int. Cl.: B60K 15/03, B29C 49/04, B29C 49/48, B29L 31/00

(54) **UNSTATIONARY CONTAINER AND METHOD FOR THE PRODUCTION THEREOF**
NICHT-STATIONÄRER BEHÄLTER UND ZUGEHÖRIGES HERSTELLUNGSVERFAHREN
RÉSERVOIR NON-STATIONNAIRE ET PROCÉDÉ DE FABRICATION ASSOCIÉ

(30) Priority: 28.11.2012 DE 102012023172
(43) Date of publication of application: 01.04.2015
(73) Proprietor: Kautex Textron GmbH & Co. KG, 53229 Bonn (DE)
(72) Inventor: LEY, Ingo, 51109 Köln (DE); WAGNER, Thomas, 50170 Kerpen (DE)
(74) Representative: Kierdorf Ritschel Richly
(86) International application number: PCT/EP2013/074666
(87) International publication number: WO 2014/082980

(56) References cited:
- EP-A1- 1 872 996
- EP-A1- 1 902 966
- WO-A1-02/36381
- JP-A- 2008 155 587
- US-A1- 2012 161 373

## Description

The invention relates to an unstationary container of thermoplastic material for a motor vehicle and to a method for the production thereof.

For the purposes of the present invention, an unstationary container should be understood as meaning a container for an operating fluid of a motor vehicle, for example a fuel tank, a container for windshield cleaning fluid or a container for a liquid additive or, for example, an oil reservoir. These containers are fitted in the motor vehicle within the installation space available and must be designed with regard to mechanical stability in such a way that they withstand collision-induced forces of deformation without leakages. This applies in particular to fuel tanks.

Depending on the installation position in the motor vehicle, it is possible that the vehicle body does not offer the deformation distance required to protect the container, and so the container itself must be protected from collision-induced forces. For this purpose, it is known to fasten additional protective elements, known as protectors, to or in front of exposed locations of the container concerned in the body or on the container itself.

Such a solution entails the disadvantage in particular that under some circumstances more installation space in the vehicle is required for this in order to accommodate the protectors. In addition, the fitting of the container in the motor vehicle is made more difficult. In addition, the attachment of external damping elements of foam material or rubber as protectors also involves comparatively high costs.

EP 1 872 996 A1 discloses a tank according to the preamble of claim 1. It relates to a tank comprising an upper tank half body and a lower tank half body which are respectively formed of a resin by integral molding. The fuel tank further comprises an outwardly protruding collar wherein the collar extends perpendicular from the tank wall.

WO 02/36381 A1 discloses a fuel tank consisting of plastic, comprising one or more weld seams serving as the joints of the tank body and/or as the connecting or sealing seams between the tank wall in the area of the openings and the lids or connection elements welded thereto. Some of the weld seams are at least partially traversed by a channel extending in a longitudinal direction, which can be ventilated and deventilated. Thereby, the weld seams are arranged perpendicular to the tank wall.

JP 2008155587 A describes a container of resin with an outwardly protruding collar which is provided on a container wall. Thereby, the collar is arranged perpendicular to the surrounding container wall. The collar can exhibit a T-form.

EP 1 902 966 A1 discloses a fuel tank comprising an upper-half tank body and a lower-half tank body which are made of bowl-shaped steel plates and which integrally include two flanges in their peripheral edges, respectively, wherein the flanges are superposed on and liquid-tightly connected to each other. The flanges are connected together by crimping into a roll shape to form an annular thick-walled connection and an annular reinforcing rib leading to the connection. The such built thick-walled connection extends perpendicular from the surrounding tank wall.

US 2012/0161373 A1 discloses a method for producing a plastic article and a blow molding tool for performing the method. The blow molding article realized with the disclosed method exhibits an outwardly protruding collar which is provided on the wall of the plastic article, wherein the orientation of the collar is perpendicular to the surrounding wall of the plastic article.

The invention is therefore based on the object of providing a container of the type mentioned at the beginning that is itself protected from the effects of collision-induced forces in the motor vehicle by simple means.

The invention is also based on the object of providing a low-cost method for producing such a container.

The object is achieved in the first instance by an unstationary container of thermoplastic material for a motor vehicle as defined in claim 1.

For the purposes of the present invention, an acute angle should be understood as meaning an angle of < 90° and > 0°.

The invention envisages providing at particularly exposed locations of the container wall at least one outwardly protruding deflector element in the form of a collar with which the collision forces at the corresponding location of the container can be cushioned or partially absorbed.

In particular because the collar formed onto the container wall extends at an acute angle in relation to a horizontal plane of the container, it is ensured that the deformation energy that is introduced into the container for example by a lateral collision is not passed on undamped into the container wall.

For this purpose, the collar may for example take the form of a shoulder hanging down to a lower end of the container. Alternatively, the collar may be drawn up in the direction of an upper end of the container. The terms "lower end" and "upper end" relate hereinafter to the installed position of the container in the motor vehicle.

The previously mentioned collar may be formed on the container as running all the way around the entire circumference thereof, but it may also only be arranged in the form of strips on particularly exposed flanks of the container, for example in the region of a seam of the container that is particularly at risk.

It goes without saying that multiple collars arranged one above the other may also be provided.

It is particularly favorable if the collar is formed on at least one container wall in one piece.

In the case of a particularly preferred variant of the unstationary container according to the invention, it is provided that the collar forms with the container wall a hinge-like element or a hinge or that the collar forms with the container wall a lock seam or a predetermined breaking line, so that forces introduced into the collar lead to a bending back, folding over or breaking off of the collar, so that at least part of the collision energy is absorbed by the permissible deformation of the collar. The collar may also be multiply folded, i.e. formed as a bellows.

The collar may for example be shaped from the container wall, from a container seam or from a container periphery formed in the manner of a flange.

In the case of a particularly advantageous configuration of the container according to the invention, it is provided that the collar is formed at least in certain regions as a cushion and encloses a volume. Such a geometry is particularly suitable for absorbing relatively high impact forces, in particular whenever the volume is formed for example as a cavity without any filling.

It may alternatively be provided that the volume is filled with a plastic foam. For this purpose, the volume may for example be filled with a polyurethane foam.

The container according to the invention may for example comprise a container body obtained by extrusion blow molding, the collar having been pressed from a peripheral projection of a preform or a pinch-off weld of a preform.

For the purposes of the invention, extrusion blow molding should be understood as meaning both classic blow molding from an extruded parison in the first heat of the extrudate, that is to say in the still plasticated state of the extrudate, and extrusion blow molding from preforms in the form of a web or sheet, likewise in the first heat of the extrudate.

It goes without saying that the container body may also have been obtained by thermoforming.

If the container body has been extrusion blow molded, the collar may have been obtained relatively easily by pinching off in the blow molding tool, so that it is as a matter of course positioned in front of the regions concerned of the seam of the container and protects them.

The container according to the invention may alternatively comprise a container body that is made up of injection-molded shells, the collar then advantageously being formed on at least one flange of a shell in one piece. For this purpose, it is merely required to enlarge the flange-like periphery that is provided in any case in the case of a container made up of shells and to provide this periphery with a corresponding geometry, for example to impart to it a stamped impression or a predetermined breaking location or a corresponding angled-away portion.

The object on which the invention is based is also achieved by a method as defined in claim 10 for producing a plastic container with the features of one of claims 1 to 9.

The central longitudinal plane of the container body is preferably a plane that is set up parallel to a lower end or an upper end or parallel to a horizontal in the installed position of the container.

The container body preferably consists of a thermoplastic material on the basis of polyethylene. Accordingly, the method comprises the extrusion of one or more preforms on the basis of polyethylene.

The collar is preferably created by pressing peripheral regions of the preform or preforms that form a projection beyond the cavities of the blow molding tool.

In the case of the extrusion of tubular preforms and the re-forming of such tubular preforms within a classic two-part blow molding tool, the collar may for example be formed in the region of the pinch-off welds of the preform. Alternatively, the diameter of the parison may be chosen such that it projects peripherally beyond the cavities of the blow molding tool, possibly after preliminary blow molding.

In the case of production of the container body by extrusion blow molding from preforms in the form of a web or sheet, the collar may be formed as running all the way around, it being possible for parts of the collar to be removed again after removal of the finished blow-molded article from the tool, so that the collar actually only remains in regions of the container in which collision protection is desired.

In the case of a particularly preferred variant of the method according to the invention, it is provided that a running-around lock seam or a running-around predetermined breaking location is stamped into the collar within the blow molding tool.

Alternatively or in addition, it may be provided that the collar is widened within the blow molding tool, preferably by applying pressure by means of at least one inflation needle or an injection needle, which is fired in within the blow molding tool in the region of the collar.

Depending on the configuration of the peripheries of the blow molding tool, a volume can be created in the collar with the inclusion of air, without requiring widening by means of an inflation needle or inflating mandrel.

The application of pressure may take place by means of blowing air or alternatively by means of an expanding plastic foam, for example by means of a PU foam.

The invention is explained below on the basis of several exemplary embodiments that are represented in the drawing, in which:
- Figure 1: shows a schematic plan view of an unstationary container according to the invention,
- Figure 2: shows a side view of the container from Figure 1,
- Figure 3: shows an enlarged sectional view of the region III in Figure 2 according to a first embodiment of the invention,
- Figure 4: shows a view corresponding to Figure 3 of a second embodiment of the container according to the invention,
- Figure 5: shows a sectional view through the container within a blow molding tool in the region of the pinched-off collar according to a third exemplary embodiment of the invention and
- Figure 6: shows a view corresponding to Figure 5 according to a fourth exemplary embodiment of the invention.

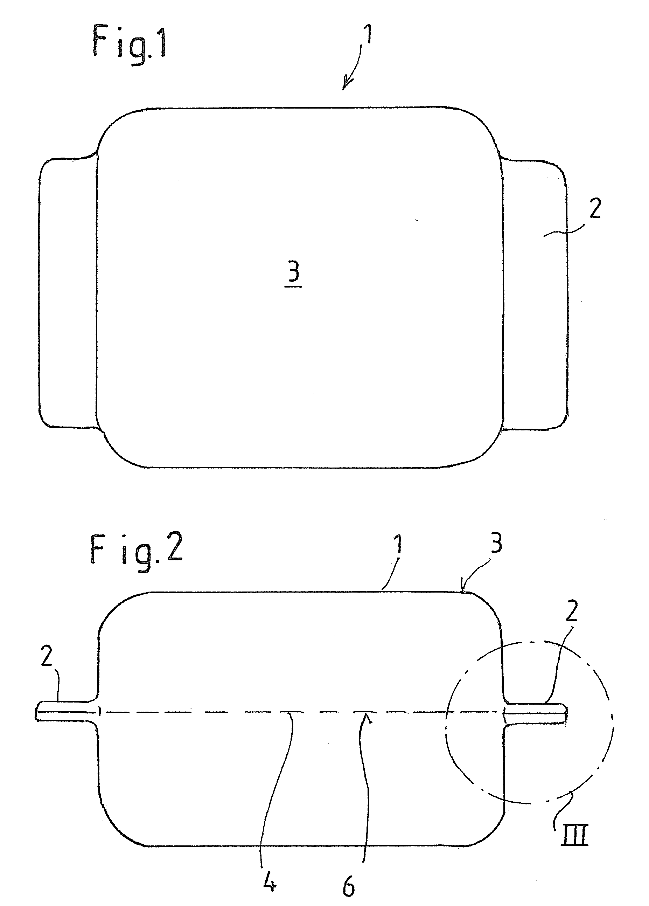

Figures 1 and 2 show a greatly simplified view of a container 1 according to the invention formed as an unstationary container, which may be formed for example as a fuel tank, as a wiping water container or as a container for receiving a liquid additive for the catalytic denitrification of the exhaust gases of a diesel engine of a motor vehicle.

The container 1 that is represented in the figures was obtained for example by extrusion blow molding of a multilayered co-extrudate of thermoplastic material on the basis of HDPE (high-density polyethylene). At least if the container 1 was obtained from a tubular extrudate, it is inherent within the extrusion blow molding process that the container has two pinch-off welds, in the region of which the tubular extrudate was pinched off within a blow molding tool. If the container 1 is produced by blow molding or thermoforming extrudates in the form of a web, it is easily possible by choosing the size of the extrudates in relation to the cavities in the blow molding tool to form the container 1 with a running-around or partially running-around collar 2, as can be seen for example from Figures 1 and 2.

As already mentioned above, it goes without saying that the container 1 according to the invention may also be formed from injection-molded half-shells with peripheries distinctly formed in the manner of flanges, which form a collar 2 in terms of the present invention.

The container geometry is shown greatly simplified in the drawings; the invention should be understood as meaning that the container 1 may have any desired shape, in particular may have multiple volumes or part-volumes communicating with one another.

In the case of the container 1 that is represented in the figures, the outwardly protruding collar 2 provided on a container wall 3 is provided on two sides of the container 1, which for example extend in the installed position of the container 1 in a motor vehicle parallel to the driving direction of the motor vehicle.

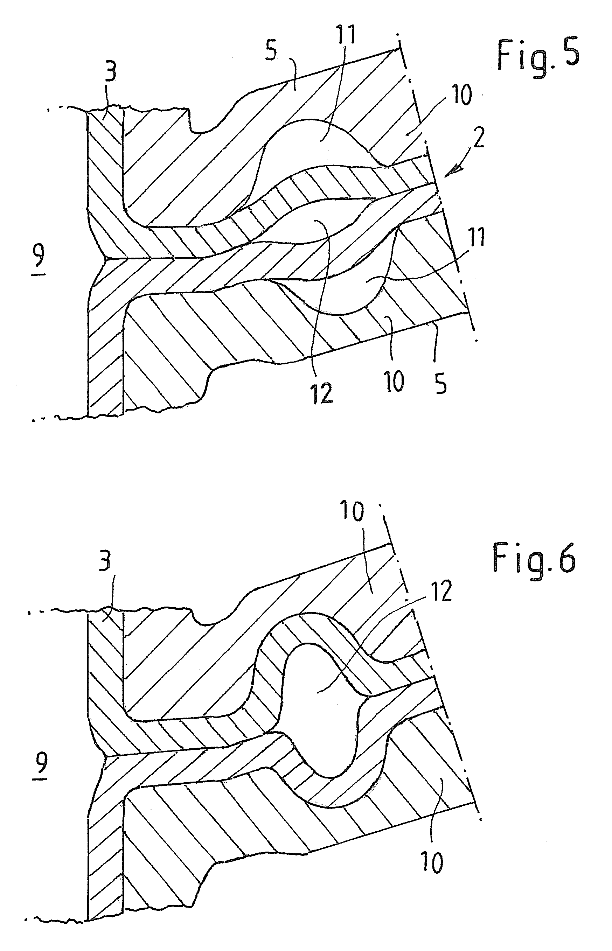

The collars 2 are formed by a bent-over portion of the container wall 3 in the region of a running-around seam 4 of the container, the seam 4 approximately forming the central longitudinal plane of the container 1 and the parting plane of a blow molding tool 5 that is represented in Figures 5 and 6.

In the case of a strictly symmetrical form of the container 1, as it is represented for example in Figures 1 and 2, the seam 4 extends exactly in the central longitudinal plane of the container 1, which at the same time defines the parting plane of the blow molding tool 5 and a plane of symmetry of the container 1.

The seam 4 does not necessarily have to extend in the plane of symmetry of the container 1, but rather the geometry of the container 1 may be such that it extends in multiple planes that are offset in relation to one another.

As already mentioned at the beginning, the collar 2 extends with respect to a plane 6 of the container 1 at an angle α which is < 90° and > 0°. In the installed position of the container 1, this plane 6 extends parallel to a horizontal and, in the case of the exemplary embodiment described, corresponds to the central longitudinal plane of the container 1. As mentioned above, this does not necessarily have to be the case however.

The collar 2 forms a continuation of the seam 4 of the container 1 that projects outwardly and for example forms a drawn-up or hanging-down shoulder.

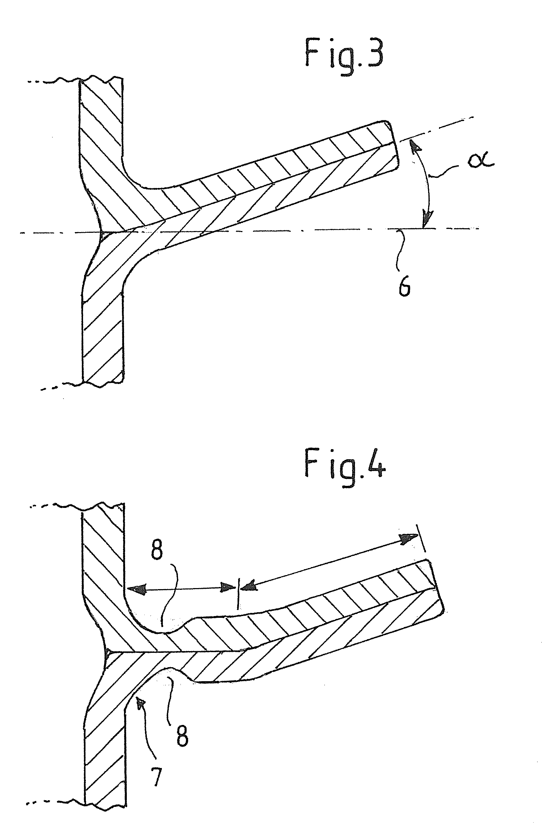

In Figures 3 to 6, the collar 2 is shown drawn-up; as already mentioned above, the collar 2 may also be arranged as hanging-down. In this way, the collar 2 forms a deflector or protector, from for instance collision-induced forces acting laterally on the container 1. It can easily be imagined that the container 1 may be arranged for example with one side relatively close to deformable parts of the body of a motor vehicle that in the event of a crash would act on the collar 2 and would bring about a bending back of the same.

A yielding of the collar 2 to a certain extent takes up the forces of deformation occurring.

In the case of the exemplary embodiment presented in Figure 4, the collar 2 is provided in its root region 7, that is to say in the region adjacent the container wall 3, with two oppositely arranged, stamped grooves 8, which form a line of weakness of the collar 2 and facilitate an evasive movement of the collar 2 or a bending away of the collar 2.

A further variant of the form of the collar 2 is represented in Figure 5.

The cavity of the blow molding tool that is denoted in the drawing by 9 and is only represented in an indicative manner is the mold cavity that defines the main volume of the container 1.

In Figure 5, the container 1 is shown within a blow molding tool 5, the running-around peripheries 10 of which, bounding a cavity 9, form a peripheral pinch-off of the container wall 3, which forms the collar 2. Formed within the peripheries 10 of the blow molding tool 5 is a part-cavity 11, which brings about a cushion-shaped form of the collar 2, as represented for example in Figure 5. In this case, the collar 2 encloses a volume 12, which forms at a cushion of the container 1 projecting from the side of the container wall 3.

For the purposes of the invention, the volume denoted by 12 is a part-volume that is separate from the main volume of the container. The invention should be understood in the sense that the collar 2 can enclose multiple volumes 12 arranged next to one another and/or one behind the other.

A comparable variant of the collar 2 of the container 1 is represented in Figure 6, the exemplary embodiment according to Figure 6 differing from the exemplary embodiment according to Figure 5 to the extent that the volume 12 of the collar 2 has been filled by means of compressed gas or by means of a foam, for example an expandable PU foam, during the shaping within the blow molding tool 5. This is possible in a known way by firing an inflation needle or an inflating mandrel into the part-cavity 11 of the blow molding tool 5.

The invention should be understood in the sense that all of the features of all of the exemplary embodiments described above can be combined with one another. Thus, for example, the collar 2 according to the exemplary embodiment in Figure 6 may be provided with predetermined bending lines or predetermined breaking locations according to the exemplary embodiment in Figure 4.

### List of designations

- 1: Container
- 2: Collar
- 3: Container wall
- 4: Seam
- 5: Blow molding tool
- 6: Plane
- 7: Root region
- 8: Grooves
- 9: Cavity
- 10: Peripheries
- 11: Part-cavity
- 12: Volume

## Claims

1. An unstationary container (1) of thermoplastic material for a motor vehicle with at least one outwardly protruding collar (2), provided at least partially on a container wall (3), the collar (2) forming an acute angle with a plane (6) of the container (1) that extends horizontally in the installed position, **characterized in that**
- the collar (2) is arranged drawn-up or hanging-down with respect to the container wall (3), and
- the collar (2) forms with the container wall (3) a hinge-like element (2) or a hinge.

2. The unstationary container as claimed in claim 1, **characterized in that** the collar (2) is formed on at least one container wall (3) in one piece.

3. The unstationary container as claimed in one of claims 1 to 2, **characterized in that** the collar (2) is multiply folded.

4. The unstationary container as claimed in one of claims 1 to 3, **characterized in that** the collar (2) forms with the container wall (3) at least one lock seam or a predetermined breaking line.

5. The unstationary container as claimed in one of claims 1 to 4, **characterized in that** the collar (2) is shaped from the container wall (3), from a container seam or from a container periphery formed in the manner of a flange.

6. The unstationary container as claimed in one of claims 1 to 5, **characterized in that** the collar (2) is formed at least in certain regions as a cushion and encloses a volume (12).

7. The unstationary container as claimed in claim 6, **characterized in that** the volume (12) is filled with a foam.

8. The unstationary container as claimed in one of claims 1 to 7, **characterized in that** the container body was obtained by extrusion blow molding, and **in that** the collar (2) was pressed from a peripheral projection of a preform or a pinch-off weld of a preform.

9. The unstationary container as claimed in one of claims 1 to 7, **characterized in that** the container body is made up of injection-molded shells, the collar (2) being formed on at least one flange of at least one shell in one piece.

10. A method for producing a plastic container with the features of one of claims 1 to 9, comprising the extrusion of one or more preforms from thermoplastic material and the re-forming and shaping of the preform or preforms in a blow molding tool while applying differential pressure within the blow molding tool, an at least partially running-around collar of the container that extends at an acute angle in relation to a central longitudinal plane of the container body being shaped at least in partial regions of the peripheries running around the blow molding tool, wherein the collar is arranged drawn-up or hanging-down with respect to the container wall, and wherein the collar forms with the container wall a hinge-like element or a hinge.

11. The method as claimed in claim 10, **characterized in that** the collar is created by pressing peripheral regions of the preform or preforms that form a projection beyond the cavities of the blow molding tool.

12. The method as claimed in either of claims 10 and 11, **characterized by** the method step of stamping a running-around lock seam or predetermined breaking location into the collar.

13. The method as claimed in one of claims 10 to 12, **characterized in that** the collar is widened within the blow molding tool, preferably by applying pressure by means of at least one inflation needle or injection needle, which is fired in within the blow molding tool in the region of the collar.

14. The method as claimed in claim 13, **characterized in that** the pressure application takes place by means of an expandable plastic foam.

## Patentansprüche

1. Instationärer Behälter (1) aus thermoplastischem Kunststoff für ein Kraftfahrzeug mit wenigstens einem zumindest teilweise an einer Behälterwand (3) vorgesehenen, außen hervorstehenden Kragen (2), wobei der Kragen (2) mit einer Ebene (6) des Behälters (1), die sich in Einbaulage horizontal erstreckt, einen spitzen Winkel bildet, **dadurch gekennzeichnet, dass**
- der Kragen (2) bezüglich der Behälterwand (3) hochgezogen oder hängend angeordnet ist; und
- der Kragen (2) mit der Behälterwand (3) ein scharnierartiges Element oder ein Scharnier bildet.

2. Instationärer Behälter nach Anspruch 1, **dadurch gekennzeichnet, dass** der Kragen (2) an wenigstens eine Behälterwand (3) einstückig angeformt ist.

3. Instationärer Behälter nach einem der Ansprüche 1 bis 2, **dadurch gekennzeichnet, dass** der Kragen (2) mehrfach gefaltet ist.

4. Instationärer Behälter nach einem der Ansprüche 1 bis 3, **dadurch gekennzeichnet, dass** der Kragen (2) mit der Behälterwand (3) wenigstens eine Falz oder eine Sollbruchlinie bildet.

5. Instationärer Behälter nach einem der Ansprüche 1 bis 4, **dadurch gekennzeichnet, dass** der Kragen (2) aus der Behälterwand (3) aus einer Behälternaht oder einem flanschartig ausgebildeten Behälterrand ausgeformt ist.

6. Instationärer Behälter nach einem der Ansprüche 1 bis 5, **dadurch gekennzeichnet, dass** der Kragen (2) zumindest bereichsweise kissenförmig ausgebildet ist und ein Volumen (12) einschließt.

7. Instationärer Behälter nach Anspruch 6, **dadurch gekennzeichnet, dass** das Volumen (12) mit einem Schaum gefüllt ist.

8. Instationärer Behälter nach einem der Ansprüche 1 bis 7, **dadurch gekennzeichnet, dass** der Behälterkörper durch Extrusionsblasformen erhalten wurde, und dass der Kragen (2) aus einem randseitigen Überstand eines Vorformlings oder einer Quetschnaht eines Vorformlings verpresst wurde.

9. Instationärer Behälter nach einem der Ansprüche 1 bis 7, **dadurch gekennzeichnet, dass** der Behälterkörper aus spritzgegossenen Schalen zusammengesetzt ist, wobei der Kragen (2) an wenigstens einen Flansch wenigstens einer Schale einstückig angeformt ist.

10. Verfahren zur Herstellung eines Kunststoffbehälters mit den Merkmalen eines der Ansprüche 1 bis 9, umfassend das Extrudieren eines oder mehrerer Vorformlinge aus thermoplastischem Kunststoff sowie das Umformen und Ausformen des oder der Vorformlinge in einem Blasformwerkzeug unter Anwendung von Differenzdruck innerhalb des Blasformwerkzeugs, wobei zumindest in Teilbereichen der umlaufenden Ränder des Blasformwerkzeugs ein zumindest teilweise umlaufender Kragen des Behälters ausgeformt wird, der sich in einem spitzen Winkel zu einer Mittellängsebene des Behälterkörpers erstreckt, wobei der Kragen bezüglich der Behälterwand hochgezogen oder hängend angeordnet ist, und wobei der Kragen mit der Behälterwand ein scharnierartiges Element oder ein Scharnier bildet.

11. Verfahren nach Anspruch 10, **dadurch gekennzeichnet, dass** der Kragen durch Verpressen von Randbereichen des oder der Vorformlinge erzeugt wird, die einen Überstand über die Kavitäten des Blasformwerkzeugs bilden.

12. Verfahren nach einem der Ansprüche 10 oder 11, **gekennzeichnet durch** den Verfahrensschritt des Einprägens einer umlaufenden Falz oder Sollbruchstelle in den Kragen.

13. Verfahren nach einem der Ansprüche 10 bis 12, **dadurch gekennzeichnet, dass** der Kragen innerhalb des Blasformwerkzeugs aufgeweitet wird, vorzugsweise durch Druckbeaufschlagung mittels wenigstens einer Blasnadel oder Injektionsnadel, die im Bereich des Kragens innerhalb des Blasformwerkzeugs einschossen wird.

14. Verfahren nach Anspruch 13, **dadurch gekennzeichnet, dass** die Druckbeaufschlagung mittels eines expandierbaren Kunststoffschaums erfolgt.

## Revendications

1. Réservoir non stationnaire (1) en matériau thermoplastique pour un véhicule automobile comprenant au moins un collier faisant saillie vers l'extérieur (2), prévu au moins en partie sur une paroi de réservoir (3), le collier (2) formant un angle aigu avec un plan (6) du réservoir (1) qui s'étend horizontalement dans la position installée, **caractérisé en ce que**
- le collier (2) est disposé de manière étirée vers le haut ou suspendue vers le bas par rapport à la paroi du réservoir (3), et
- le collier (2) forme avec la paroi du réservoir (3) un élément de type charnière (2) ou une charnière.

2. Réservoir non stationnaire selon la revendication 1, **caractérisé en ce que** le collier (2) est formé d'une seule pièce sur au moins une paroi de réservoir (3).

3. Réservoir non stationnaire selon l'une quelconque des revendications 1 ou 2, **caractérisé en ce que** le collier (2) est plié en couches multiples.

4. Réservoir non stationnaire selon l'une quelconque des revendications 1 à 3, **caractérisé en ce que** le collier (2) forme avec la paroi de réservoir (3) au moins un joint à verrouillage ou une ligne de rupture prédéterminée.

5. Réservoir non stationnaire selon l'une quelconque des revendications 1 à 4, **caractérisé en ce que** le collier (2) est formé à partir de la paroi du réservoir (3), d'un joint de réservoir ou d'une périphérie de réservoir formée à la manière d'une bride.

6. Réservoir non stationnaire selon l'une quelconque des revendications 1 à 5, **caractérisé en ce que** le collier (2) est formé au moins dans certaines régions sous forme de coussin et renferme un volume (12).

7. Réservoir non stationnaire selon la revendication 6, **caractérisé en ce que** le volume (12) est rempli de mousse.

8. Réservoir non stationnaire selon l'une quelconque des revendications 1 à 7, **caractérisé en ce que** le corps du réservoir a été réalisé par extrusion-soufflage, et **en ce que** le collier (2) a été pressé à partir d'une saillie périphérique d'une préforme ou par une soudure par pinçage d'une préforme.

9. Réservoir stationnaire selon l'une quelconque des revendications 1 à 7, **caractérisé en ce que** le corps de réservoir est constitué de coques moulées par injection, le collier (2) étant formé d'une seule pièce sur au moins une bride d'au moins une coque.

10. Procédé pour produire un réservoir en plastique ayant les caractéristiques de l'une quelconque des revendications 1 à 9, comprenant l'extrusion d'une ou plusieurs préformes à partir de matériau thermoplastique et le reformage et la mise en forme de la préforme ou des préformes dans un outil de moulage par soufflage tout en appliquant une pression différentielle à l'intérieur de l'outil de moulage par soufflage, un collier s'étendant au moins en partie sur la circonférence du réservoir, qui s'étend sur un angle aigu par rapport à un plan longitudinal central du corps de réservoir, étant formé au moins dans des régions partielles des périphéries s'étendant autour de l'outil de moulage par soufflage, le collier étant agencé de manière étirée vers le haut ou suspendue vers le bas par rapport à la paroi du réservoir, et le collier formant avec la paroi du réservoir un élément de type charnière ou une charnière.

11. Procédé selon la revendication 10, **caractérisé en ce que** le collier est créé en pressant des régions périphériques de la préforme ou des préformes qui forment une saillie au-delà des cavités de l'outil de moulage par soufflage.

12. Procédé selon l'une ou l'autre des revendications 10 et 11, **caractérisé par** l'étape de procédé d'estampage d'un joint à verrouillage périphérique ou d'une zone de rupture prédéterminée dans le collier.

13. Procédé selon l'une des revendications 10 à 12, **caractérisé en ce que** le collier est élargi à l'intérieur de l'outil de moulage par soufflage, de préférence en appliquant une pression au moyen d'au moins une aiguille de gonflage ou une aiguille d'injection qui est projetée à l'intérieur de l'outil de moulage par soufflage dans la région du collier.

14. Procédé selon la revendication 13, **caractérisé en ce que** l'application de pression a lieu au moyen d'une mousse de plastique expansible.
